# NEUE EUROPÄISCHE PATENTSCHRIFT

(11) **EP 2 306 063 B2**
(45) Veröffentlichungstag und Bekanntmachung des Hinweises auf die Entscheidung über den Einspruch: **10.08.2022**
(45) Hinweis auf die Patenterteilung: 15.04.2015
(21) Anmeldenummer: 10010472.8
(22) Anmeldetag: 24.09.2010
(51) Int. Cl.: F16P 3/14

(54) **Sicherheitssensor**
Security sensor
Capteur de sécurité

(30) Priorität: 02.10.2009 DE 102009048111
(43) Veröffentlichungstag der Anmeldung: 06.04.2011
(73) Patentinhaber: Leuze electronic GmbH + Co. KG, 73277 Owen/Teck (DE)
(72) Erfinder: Lohmann, Lutz, Dr., 82140 Olching (DE); Haberer, Hermann, 81379 München (DE)
(74) Vertreter: Ruckh, Rainer Gerhard

(56) Entgegenhaltungen:
- EP-A1- 2 037 297
- EP-A2- 1 329 662
- EP-A2- 1 876 383
- EP-B1- 1 089 030
- DE-A1-102004 038 906
- DE-A1-102007 033 766
- DE-A1-102008 004 941
- DE-U1- 20 103 828
- DE-U1-202006 012 351
- "Smartscan 5000 Series Light Curtains", Smartscan User Manual Issue 10.0, 14 November 1996 (1996-11-14), XP0055269511,

## Beschreibung

Die Erfindung betrifft ein Verfahren gemäß dem Oberbegriff des Anspruchs 1.

Derartige Sicherheitssensoren werden allgemein im Bereich der Sicherheitstechnik, insbesondere im Bereich des Personenschutzes eingesetzt, wobei mit diesen als Überwachungsbereich ein Gefahrenbereich an einem von einer Maschine oder Anlage überwacht wird. Ein für derartige Überwachungsaufgaben eingesetzter Sicherheitssensor in Form eines Lichtgitters ist aus der DE 299 20 715 U1 bekannt. Das Lichtgitter umfasst eine Mehrfachanordnung von Lichtschranken. Wird mit diesem Lichtgitter ein Objekt oder eine Person detektiert, wird in dem Lichtgitter eine Objektmeldung generiert, welche zum Abschalten der Maschine führt. Dadurch erfüllt das Lichtgitter seine Sicherheitsfunktion, da mit diesem erfasst wird, wenn sich eine Person in den Gefahrenbereich begibt, was zu einer Gefährdung der Person führen würde, wenn dann die Maschine oder Anlage eingeschaltet bliebe. Jedoch würde auch ein Eindringen eines mit der Maschine zu bearbeitenden Werkstücks in den Gefahrenbereich zu einer Objektmeldung in dem Lichtgitter führen, welche dann ein Abschalten der Maschine zur Folge hätte. Da es sich bei dem zu bearbeitenden Werkstück um ein nicht sicherheitskritisches Objekt handelt, ist ein Abschalten der Maschine bei dessen Detektion innerhalb des Gefahrenbereichs unnötig und daher unerwünscht.

Um ein derartiges unnötiges Abschalten der Maschine zu vermeiden, sind bei dem Lichtgitter der DE 299 20 715 U1 zusätzlich zu der Lichtschrankenanordnung am Eingang beziehungsweise Ausgang des Gefahrenbereichs sogenannte Mutingsensoren vorgesehen, die eine Unterscheidung zwischen Personen oder allgemein sicherheitskritischen Objekten und zulässigen Gegenständen als nicht sicherheitskritischen Objekten ermöglichen. Wird ein zulässiger Gegenstand detektiert, so erzeugen die Mutingsensoren ein Mutingsignal, das heißt ein Überbrückungssignal, das bewirkt, dass trotz einer Unterbrechung der Lichtschranken des Lichtgitters die Abschaltfunktion vorübergehend deaktiviert ist, das heißt die Maschine nicht abgeschaltet wird. Wird hingegen eine der Lichtschranken unterbrochen und erzeugen die Mutingsensoren kein Überbrückungssignal, so wird die zu überwachende Maschine abgeschaltet.

Nachteilig hierbei ist, dass die von Reflexionslichtschranken gebildeten Mutingsensoren sowie deren Ansteuerung und Auswertung eine zusätzliche, fehlersichere Einheit bilden müssen, um ein sicheres Überbrückungssignal zu generieren. Dies bedingt eine erhebliche Erhöhung des Kostenaufwands bei der Realisierung der Gefahrenbereichabsicherung verursachen. Dieser Nachteil wird dadurch noch verstärkt, dass sowohl am Eingang und am Ausgang jeweils ein Paar von Mutingsensoren vorgesehen sein muss, damit die zulässigen Objekte von nicht zulässigen Objekten unterschieden werden können.

Die EP 1 329 662 betrifft eine Sensoranordnung zur Überwachung eines Gefahrenbereichs. Die Sensoranordnung umfasst ein Lichtgitter mit einer ersten Säule mit einer Anzahl von Sendern in Form von Dioden und mit einer zweiten Säule mit einer Anzahl von Photodioden. Mit dem Lichtgitter wird eine Sicherheitsfunktion derart erfüllt, dass gefahrbringende Eingriffe in den Gefahrenbereich erkannt werden. Die Sensoranordnung umfasst weiterhin eine Muting-Sensoranordnung. Mit dieser kann zu vorgegebenen Zeiten das Lichtgitter gemutet, das heißt deaktiviert werden, damit nicht gefahrbringende Objekte das Lichtgitter passieren können ohne dass das Lichtgitter anspricht. Die Muting-Sensoranordnung ist von zwei Lichtschranken gebildet, deren Lichtstrahlen x-förmig verlaufen und deren Komponenten an separaten, senkrecht zum Lichtgitter verlaufenden Gehäusen angeordnet sind.

Die DE 10 2004 038 906 A1 betrifft ein Verfahren zur Erfassung beweglicher Objekte in einer Überwachungseinrichtung mit mindestens einer berührungslos wirkenden Schutzeinrichtung und einer Auswerteeinheit, die ein Steuersignal abgibt, das abhängig ist von einem zulässigen oder unzulässigen Objekt, dass in ein einen Überwachungsbereich begrenzendes Schutzfeld der berührungslos wirkenden Schutzeinrichtung eindringt. Um die Überwachung sicherer zu gestalten, wird vorgeschlagen, dass ein Objekt vor dem Eintritt in den Überwachungsbereich von wenigstens einer kontaktlosen Erkennungseinrichtung identifiziert wird und Objektinformationen von einer Marke auf dem Objekt an die Auswerteeinheit übertragen werden. Die Erfindung betrifft ferner eine Überwachungseinrichtung zur Durchführung des Verfahrens.

Die DE 10 2008 004 941 A1 betrifft eine Sicherheitsanordnung zur Überwachung eines Durchgangs, durch den nur zulässige Objekte in wenigstens eine Bewegungseinrichtung befördert werden. Die Sicherheitsanordnung umfässt einen ersten optoelektronischen Sensor, der wenigstens einen Lichtsender und wenigstens einen Lichtempfänger aufweist zur Überwachung eines ebenen, in dem Durchgang angeordneten Schutzfelds auf Durchtritt durch das Objekt. Weiterhin umfasst die Sicherheitsanordnung wenigstens eine Steuer- und Auswerteeinheit, durch die bei Durchtritt eines unzulässigen Objekts ein Warn- oder Steuersignal ableitbar ist, sowie einen Muting-Sensor, welcher in Bewegungsrichtung vor dem Durchgang angeordnet und mit der Steuer- und Auswerteeinheit zur rechtzeitigen Deaktivierung des Schutzfeldes bei zulässigen Objekten verbunden ist. In der Steuer- und Auswerteeinheit sind Mittel zur Bestimmung und Auswertung einer Objektgeschwindigkeit vorhanden. Abhängig von einer Objektdetektion durch den Muting-Sensor und abhängig von der Objektgeschwindigkeit ist das Warn- oder Steuersignal für einen berechneten Zeitpunkt und für eine berechnete Dauer unterdrückbar und zwar von dem Zeitpunkt des Einfahrens des Objekts in das Schutzfeld bis zum Verlassen des Schutzfelds, so dass das Schutzfeld nur für die Dauer des tatsächlichen Durchtritts des zulässigen Objektes deaktiviert ist.

Der Erfindung liegt die Aufgabe zugrunde eine sensorüberwachte Gefahrenbereichsüberwachung bereitzustellen, mit welcher mit möglichst geringem Aufwand eine sichere Überwachung eines Gefahrenbereichs an einem Arbeitsmittel durchführbar ist, ohne dabei die Verfügbarkeit des Arbeitsmittels unnötig einzuschränken.

Zur Lösung dieser Aufgabe sind die Merkmale des Anspruchs 1 vorgesehen. Vorteilhafte Ausführungsformen und zweckmäßige Weiterbildungen der Erfindung sind in den Unteransprüchen beschrieben.

Das erfindungsgemäße Verfahren dient zur Gefahrenbereichsüberwachung einer Maschine oder Anlage mittels eines Sicherheitssensors. Dieser umfasst eine Sensoreinheit mit wenigstens einem Lichtstrahlen emittierenden Sender und einem Lichtstrahlen empfangenden Empfänger zur Überwachung eines Schutzfelds sowie eine Auswerteeinheit, in welcher bei Erfassung eines Objekts im Schutzfeld als Sicherheitsfunktion ein Abschaltbefehl für die Maschine oder Anlage generiert wird. Mittels einer externen oder internen Überbrückungseinheit wird die Sicherheitsfunktion des Sicherheitssensors überbrückt, wenn innerhalb eines Zeitintervalls von zwei unabhängigen Signalquellen jeweils ein Objektvorhandensignal registriert wird. Eine der Signalquellen ist im Sicherheitssensor selbst integriert.

Durch die Überbrückungseinheit wird die Verfügbarkeit der mit dem Sicherheitssensor durchgeführten Gefahrenbereichsüberwachung erhöht, da mit dieser ein unnötiges Abschalten des zu überwachenden Arbeitsmittels, das von einer Maschine oder Anlage gebildet ist, bei Eindringen zulässiger, das heißt nicht sicherheitskritischer Objekte in das Schutzfeld des Sicherheitssensors vermieden wird. Somit erfolgt ein Abschalten des mit dem Sicherheitssensor überwachten Arbeitsmittels nur im Gefahrenfall, das heißt dann, wenn mit dem Sicherheitssensor im Schutzfeld ein sicherheitskritisches Objekt, insbesondere eine Person registriert wird.

Der Grundgedanke der Erfindung besteht darin, dass in der Überbrückungseinheit zur Generierung eines sicheren Überbrückungssignals für den Sicherheitssensor eine Gleichzeitigkeitsüberwachung der von den beiden Signalquellen generierten Objektvorhandensignalen durchgeführt wird, indem überwacht wird, ob nach Auftreten des Objektvorhandensignals einer ersten Signalquelle innerhalb eines bestimmten Zeitintervalls das Objektvorhandensignal der zweiten Signalquelle auftritt. Nur wenn diese Bedingung verfüllt ist, wird in der Überbrückungseinheit das Überbrückungssignal generiert, mit der der Sicherheitssensor überbrückt wird, so dass während der Überbrückung ein Eindringen eines Objekts in das Schutzfeld des Sicherheitssensors nicht zu einem Abschaltbefehl für das Arbeitsmittel führt.

Wird dagegen in der Überbrückungseinheit zwar das erste Objektvorhandensignal der ersten Signalquelle registriert, nicht jedoch innerhalb des Zeitintervalls das zweite Objektvorhandensignal der zweiten Signalquelle, so überführt das Überbrückungssignal den Sicherheitssensor in einen sicheren Verriegelungszustand, der zu einem Abschalten des Arbeitsmittels, das heißt es erfolgt ein Übergehen in einen sicheren Zustand.

Ein wesentlicher Vorteil besteht dabei darin, dass bereits durch die Gleichzeitigkeitsüberwachung der Objektvorhandensignale der Signalquelle die erforderliche Sicherheit des Überbrückungssignals erhalten wird. Das Zeitintervall, innerhalb dessen die Objektvorhandensignale vorliegen und erkannt werden müssen, beträgt dabei gemäß den Anforderungen der relevanten Sicherheits-Normvorschriften maximal 4s.

Hierbei liegt folgende sicherheitstechnische Überlegung zugrunde. Wenn durch einen Fehler einer Signalquelle ein fehlerhaftes Objektvorhandensignal, ist es äußerst unwahrscheinlich, dass durch den Eingriff einer Person innerhalb des kurzen, maximal 4s dauernden Zeitintervalls gerade die geforderte Sequenz der Objektvorhandensignale generiert wird.

Besonders vorteilhaft bei diesem Sicherheitskonzept ist, dass infolge der Gleichzeitigkeitsüberwachung eine sichere Überbrückung des Sicherheitssensors auch dann erfolgt, wenn die Objektvorhandensignale der Signalquellen nicht sicher, das heißt nicht durch fehlersichere Einheiten generiert werden. Dadurch wird mit geringem konstruktivem Aufwand eine sichere Überbrückungsfunktion realisiert.

Insbesondere können auch bei nicht sicherer Ausbildung der Signalquellen und deren Objektvorhandensignale durch die in der Überbrückungseinheit durchgeführte Gleichzeitigkeitsüberwachung statische Fehler, die beispielsweise durch Kabelkurzschlüsse verursacht sind, und dynamische Fehler, die beispielsweise durch Softwarefehler bedingt sind, sicher abgefangen, das heißt aufgedeckt werden.

Prinzipbedingt erforderlich ist es, dass das Objektvorhandensignal der nicht im Sicherheitssensor integrierten Signalquelle selbsttätig unabhängig von menschlichen Eingriffen generiert wird. Das Objektvorhandensignal bildet dabei das erste Objektvorhandensignal. Das zweite Objektvorhandensignal, das innerhalb des Zeitintervalls folgen muss, wird dabei in dem Sicherheitssensor selbst generiert.

Dabei liegt folgendes Sicherheitskonzept zugrunde. Mit dem Objektvorhandensignal wird ein Objekt dicht vor Eintreten in das Schutzfeld des Sicherheitssensors signalisiert. Handelt es sich um ein zulässiges, nicht sicherheitskritisches Objekt, dessen Bahnkurve bekannt ist, so dringt dies in jedem Fall innerhalb des geforderten Zeitintervalls nach Auftreten des ersten Objektvorhandensignals in den Sicherheitssensor ein, so dass dieses durch das zweite Objektvorhandensignal erkannt wird. Bei einem nicht zulässigen Objekt, insbesondere einer Person, oder bei einem Defekt einer der Signalquellen ist diese Bedingung nicht erfüllt, so dass dann eine Überbrückung des Sicherheitssensors unterbleibt.

Besonders vorteilhaft ist dabei die externe Signalquelle von einer nicht sicheren Steuerung gebildet. Diese nicht sichere Steuerung kann insbesondere von einer Steuerung gebildet sein, die zu Steuerungsaufgaben an der zu überwachenden Anlage oder Maschine dient. Dabei wertet die nicht sichere Steuerung vorteilhaft das Signal eines Sensors oder eines mit dieser gesteuerten Arbeitsgeräts aus. Damit ist eine Doppelfunktion dieser Steuerung gegeben, so dass zur Ausbildung der externen Signalquelle keine separate Einheit notwendig ist. Da zudem die weitere Signalquelle im Sicherheitssensor selbst integriert ist, ist nur ein äußerst geringer konstruktiver Aufwand zur Ausbildung der Signalquelle notwendig.

Gemäß einer ersten Variante kann die im Sicherheitssensor integrierte Signalquelle von der Sensoreinheit des Sicherheitssensors gebildet sein. In diesem Fall wird mit dieser Signalquelle sogar gegebenenfalls ein sicheres Objektvorhandensignal generiert, obwohl dies zur Erfüllung der Sicherheitsanforderungen nicht nötig ist.

Gemäß einer zweiten Variante kann die im Sicherheitssensor integrierte Signalquelle nur von einem Teil der Sensoreinheit des Sicherheitssensors gebildet sein. Ist beispielsweise der Sicherheitssensor als Lichtvorhang ausgebildet, so umfasst dessen Sensoreinheit mehrere Paare von Lichtstrahlen emittierenden Sendern und Lichtstrahlen empfangenden Empfängern, die einzelne Strahlachsen des Lichtvorhangs bilden. Dann kann ein Teil der Strahlachsen oder sogar nur eine der Strahlachsen die Signalquelle bilden. Dabei muss das mit dieser Signalquelle generierte Objektvorhandensignal nicht sicher sein.

Gemäß einer weiteren Alternative ist die in diesem integrierte Signalquelle von einem separaten Sensor gebildet, wobei dieser bevorzugt ein optischer Sensor ist.

Dabei wird die Auswerteeinheit des Sicherheitssensors für die Auswertung der Signale des Sensors mitgenutzt, wobei mittels einer Firmwave ein zusätzlicher Schaltpfad für den Sensor realisiert ist.

Damit kann die Auswertung der Signalquelle im Sicherheitssensor mit geringem konstruktivem Aufwand erfolgen.

Der Sicherheitssensor weist bevorzugt eine Auswerteeinheit mit einem redundanten Aufbau auf.

Besonders vorteilhaft kann der Sicherheitssensor zwei sich gegenseitig zyklisch überprüfende Microcontroller aufweisen. Damit kann das geforderte Sicherheitsniveau für den Einsatz des Sicherheitssensors im Bereich der Sicherheitstechnik erfüllt werden. Die Auswerteeinheit kann vorteilhaft die Funktion der Überbrückungseinheit mitübernehmen. Alternativ ist die Überbrückungseinheit von einer sogenannten Rechnereinheit gebildet.

Der Sicherheitssensor kann generell als Lichtvorhang oder als Kamerasystem mit wenigstens einer Kamera als Sensoreinheit ausgebildet sein. Alternativ kann der Sicherheitssensor als Flächendistanzsensor, das heißt als scannender Distanzsensor ausgebildet sein.

Vorteilhaft ist die Überbrückungseinheit als externe Einheit dadurch ausgebildet, dass diese in einer Funktionseinheit eines Sicherheitsmonitors eines sicheren Bussystems vorgesehen oder dass diese in einem separaten mutingfähigen Steuergerät integriert ist.

Mit der erfindungsgemäßen Überbrückungseinheit können sämtliche Mutingfunktionen realisiert werden, die bei einem System, das mit Mutingsensoren arbeitet, auch erteilt werden.

Hierzu gehört beispielsweise ein richtungsabhängiges Muting, bei welchem in Abhängigkeit der Bewegungsrichtung eines Objekts ein Überbrückungssignal in der Überbrückungseinheit generiert wird. Eine weitere Funktion stellt das Einleiten eines vorzeitigen Mutingendes dar. Mit dieser Funktion wird eine ursprünglich durch die Überbrückungseinheit vorgegebene Dauer einer Überbrückung aufgehoben, wenn beispielsweise innerhalb des Schutzfeldes spezifische Objekteingriffe registriert werden, die dem eines das Schutzfeld passierenden zulässigen Objekts nicht entsprechen. Umgekehrt ist auch eine Muting-Delay-Funktion möglich. Hier kann die ursprünglich von der Überbrückungseinheit vorgegebene Überbrückungszeit verlängert werden, wenn mit den Signalquellen beziehungsweise dem Sicherheitssensor selbst bestimmte Signalsequenzen registriert werden, die einem erwarteten zulässigen Objekt entsprechen.

Generell wird die Überbrückung aufgehoben, wenn eine der Signalquellen keine Objektdetektion mehr signalisiert oder im Schutzfeld des Sicherheitssensor kein Objekt registriert wird. Dabei kann die Aufhebung der Überbrückung generell durch eine Delay-Funktion verzögert werden.

Schließlich ist auch eine Freifahrfunktion, das heißt ein sogenanntes Override realisierbar. Wird beispielsweise ein zulässiges, nicht sicherheitskritisches Objekt durch das Schutzfeld des Sicherheitssensors bewegt, wobei hierzu der Sicherheitssensor für eine bestimmte Zeit überbrückt wird, so kann es beispielsweise durch Stillstehen einer Förderstrecke vorkommen, dass dieses Objekt im Schutzfeld stehen bleibt und der Sicherheitssensor dieses Objekt als sicherheitskritisch erkennt und einen Abschaltbefehl für die Anlage generiert. Dann aber bleibt auch die Förderstrecke aus, das heißt das Objekt könnte nicht mehr aus dem Schutzfeld herausgefahren werden und die Anlage bliebe dauernd außer Betrieb. Um diese Situation aufzulösen, ist beispielsweise ein von einer autorisierten Bedienperson ausschließlich bedienbarer Schlüsselhalter vorgesehen, durch welche trotz des Abschaltbefehls des Sicherheitssensors ein Herausfahren des Objekts aus dem Schutzfeld durch Einschalten der Förderstrecke freigegeben wird. Da während des Ausfahrens der Sicherheitssensoren inaktiv ist, muss in dieser Zeit die Bedienperson selbst kontrollieren, ob ein sicherheitskritisches Objekt in das Schutzfeld eindringt. Nach Ausfahrt des Objekts aus dem Schutzfeld wird der Sicherheitssensor wieder aktiviert.

Die Erfindung wird im Folgenden anhand der Zeichnungen erläutert. Es zeigen:
- Figur 1:: Seitenansicht einer mit einem Sicherheitssensor überwachten Anlage.
- Figur 2:: Draufsicht auf den Sicherheitssensor gemäß Figur 1.
- Figur 3:: Blockschaltbild des Sicherheitssensors gemäß den Figuren 1 und 2 mit einer Überbrückungseinheit.

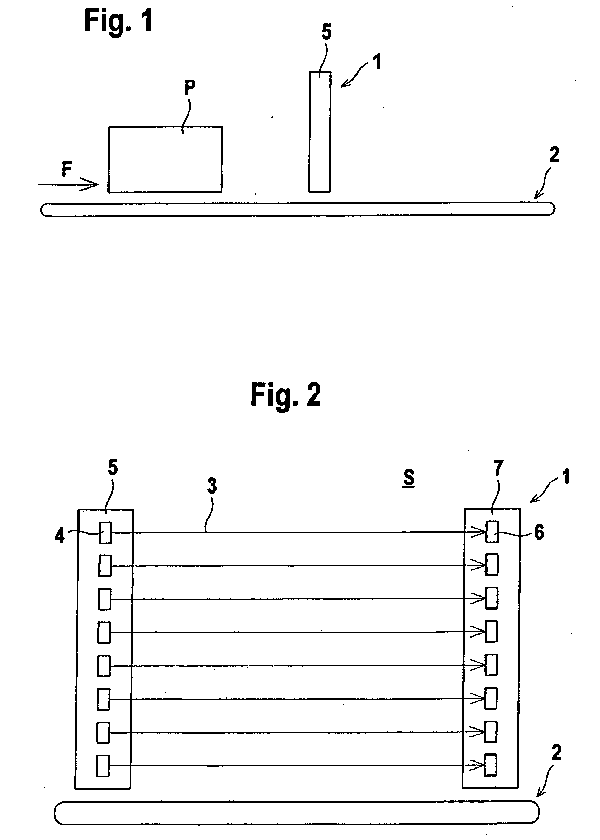

Die Figuren 1 und 2 zeigen einen Lichtvorhang 1 als Beispiel eines Sicherheitssensors, der zur Gefahrenbereichsüberwachung an einer Anlage eingesetzt wird. Als Bestandteil der Anlage ist ein Förderband 2 vorgesehen. Der Lichtvorhang 1 umfasst eine Anordnung von Lichtstrahlen 3 emittierenden Sendern 4, die mit einer nicht dargestellten Steuereinheit zyklisch einzeln nacheinander aktiviert werden. Die Sender 4 und die Steuereinheit sind in einem ersten Gehäuse 5 integriert. Der Lichtvorhang 1 umfasst weiter eine Anordnung von Empfängern 6 zum Empfang der Lichtstrahlen 3. Den Empfängern 6 ist eine in den Figuren 1 und 2 nicht dargestellte Auswerteeinheit zur Steuerung des Empfängerbetriebs und zur Auswertung der an den Ausgängen der Empfänger 6 anstehenden Empfangssignale zugeordnet. Zur Erfüllung der Anforderungen für den Einsatz des Lichtvorhangs 1 im Bereich der Sicherheitstechnik weist die Auswerteeinheit einen redundanten Aufbau auf. Vorzugsweise besteht die Auswerteeinheit aus zwei sich zyklisch überwachenden Microcontrollern. Die Empfänger 6 und die Auswerteeinheit sind in einem zweiten Gehäuse 7 integriert. Mit dem Lichtvorhang 1 wird ein Schutzfeld überwacht, welches von dem Bereich zwischen den beiden Gehäusen 5, 7 gebildet ist. Dabei ist jedem Sender 4 jeweils ein Empfänger 6 zugeordnet, so dass bei freiem Schutzfeld die vom Sender 3 emittierten Lichtstrahlen 3 auf den Empfänger 6 treffen. Jeweils ein Sender 4 und der zugeordnete Empfänger 6 definieren eine Strahlachse des Lichtvorhangs 1, wobei die Richtung der Strahlachse durch die Lichtstrahlen 3 des jeweiligen Senders 3 gegeben ist. Die in einer Ebene liegenden Strahlachsen des Lichtgitters bilden eine optische Sensoreinheit S zur Überwachung des Schutzfelds. Bei einem Objekteingriff in das Schutzfeld wird der Strahlengang der Lichtstrahlen 3 wenigstens eines Senders 4, das heißt wenigstens eine Strahlachse unterbrochen.

In der Auswerteeinheit wird in Abhängigkeit der Signale der Sensoreinheit ein fehlersicheres Schaltsignal generiert, dessen Schaltzustände angeben, ob sich ein Objekt im Überwachungsbereich befindet oder nicht. Das Schaltsignal mit dem Schaltzustand "Objekt erkannt" bildet dabei einen Abschaltbefehl für die zu sichernde Anlage, die neben dem Förderband 2 insbesondere eine Maschine aufweisen kann, von der Gefahren für Personen ausgehen. Befindet sich dagegen kein Objekt im Schutzfeld, gibt der Lichtvorhang 1 mit dem Schaltsignal im Schaltzustand "freies Schutzfeld" den Betrieb der Anlage frei.

Auf diese Weise wird mit dem Lichtvorhang 1 eine Sicherungsfunktion ausgelöst die verhindert, dass Personen, oder allgemein sicherheitskritische Objekte unbefugt in den Gefahrenbereich der Anlagen gelangen.

Jedoch passieren auf dem Förderband 2 in einer Förderrichtung F geförderte Paletten P oder dergleichen das Schutzfeld des Lichtvorhangs 1. Diese Paletten bilden nicht sicherheitskritische, zulässige Objekte. Wenn der Lichtvorhang 1 einen Abschaltbefehl generieren würde, wenn ein solches Objekt das Schutzfeld passiert, würde dies ein unnötiges Stillsetzen der Anlage zu vermeiden.

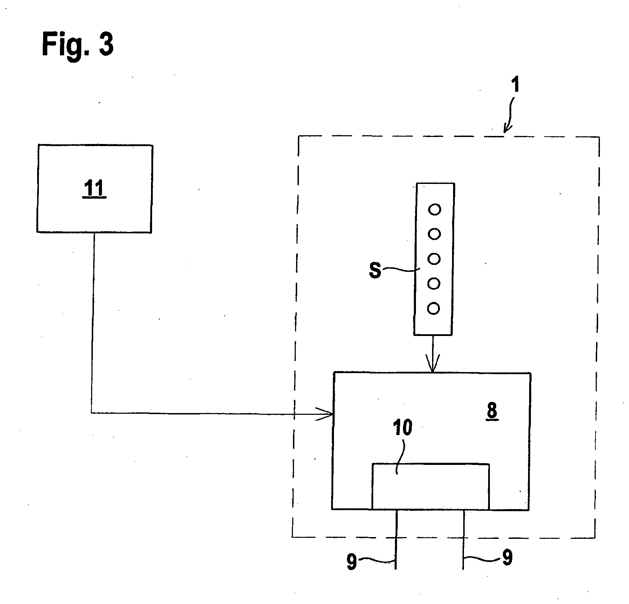

Um ein derartiges unnötiges Stillsetzen zu vermeiden, ist dem Lichtvorhang 1 eine Überbrückungseinheit 8 zugeordnet, wie in Figur 3 dargestellt ist. Die Überbrückungseinheit 8 ist im vorliegenden Fall im Lichtvorhang 1 integriert. Die Überbrückungseinheit 8 weist einen redundanten Aufbau auf und besteht bevorzugt aus zwei sich zyklisch überwachenden Rechercheneinheiten. Im vorliegenden Fall ist die Überbrückungseinheit 8 von der Auswerteeinheit des Lichtvorhangs 1, welcher die Signale der Sensoreinheit S zugeführt sind, gebildet. Mit der Überbrückungseinheit 8 werden zwei sichere Schaltausgänge 9 einer Ausgangsschaltung 10 angesteuert, wobei die derart ausgegebenen Schaltsignale zur Steuerung der Anlage dienen.

Um zu gewährleisten, dass die Palette P als zulässiges Objekt das Schutzfeld des Lichtvorhangs 1 ohne die Anlage stillzusetzen passieren kann, wird in der Überbrückungseinheit 8 ein Überbrückungssignal generiert, das die Sicherheitsfunktion des Lichtvorhangs 1 überbrückt. Durch diese Überbrückung wird auch bei einer Objekterfassung des Lichtvorhangs 1 die Anlage nicht stillgesetzt. Wird dagegen von der Überbrückungseinheit 8 kein Überbrückungssignal generiert, ist die Sicherheitsfunktion des Lichtvorhangs 1 aktiviert, das heißt bei einer Objekterkennung des Lichtvorhangs 1 wird das Schaltsignal "Objekt erkannt" als Abschaltbefehl über die Schaltausgänge 9 ausgegeben, so dass dann die Anlage stillgesetzt wird.

Die Überbrückung der Sicherheitsfunktion erfolgt in der Überbrückungseinheit 8 in Abhängigkeit der Signale zweier Signalquellen, wobei eine der Signalquellen im Lichtvorhang 1 integriert ist und die andere Signalquelle extern, außerhalb des Lichtvorhangs 1 angeordnet ist. Allgemein kann es sich bei diesen Signalquellen um nicht fehlersichere Signalquellen handeln. Die nicht im Sicherheitssensor integrierte Signalquelle muss nur insoweit prinzipbedingt sicher sein, dass ausgeschlossen ist, dass diese durch menschliche Einflüsse, das heißt durch Betätigung einer Person zur Signalabgabe auslösbar ist.

Die externe Signalquelle ist im vorliegenden Fall von der Steuerung 11 des Förderbands 2 gebildet. Diese kann von einer SPS-Steuerung gebildet sein, wobei diese im vorliegenden Fall nicht fehlersicher ausgebildet ist.

Mit dieser Steuerung 11 wird ein Objektvorhandensignal generiert, wenn sich die Palette als zulässiges Objekt unmittelbar vor Einfahrt in das Schutzfeld des Lichtvorhangs 1 befindet. Das Objektvorhandensignal kann dabei von der Steuerung des Förderbands 2 selbst generiert werden, wenn beispielsweise die Bahnen von Paletten vorgegeben und durch die Steuerung definiert sind. Alternativ kann ein Sensor vorgesehen sein, mit dem die Palette identifiziert und dicht vor der Einfahrt in das Schutzfeld erkannt werden kann. Ein derartiger Sensor kann beispielsweise ein Barcodelesegerät sein, mit dem ein Barcode auf der Palette erkannt wird. Alternativ kann der Sensor eine Schreib-/Leseeinheit zur Erkennung eines Transponders in der Palette sein.

Mit der im Sicherheitssensor vorgesehenen Signalquelle wird das Einfahren der Palette erkannt, wobei bei dieser Objekterkennung eine genaue Identifizierung der Palette oder deren Unterscheidung von einer Person oder allgemein einen gefahrbringenden, sicherheitskritischen Objekt nicht nötig ist. Prinzipiell kann im Lichtvorhang 1 als Signalquelle ein separater Sensor vorgesehen sein, der nicht fehlersicher sein muss. Alternativ kann die gesamte Sensoreinheit des Lichtvorhangs 1 als Signalquelle genutzt werden. Im vorliegenden Fall ist die Signalquelle von einer Teilmenge der Strahlachsen des Lichtvorhangs 1 gebildet. Wie aus Figur 1 ersichtlich, ist im vorliegenden Fall die Höhe der Palette geringer als die des Lichtvorhangs 1. Daher werden vorzugsweise mehrere der unteren Strahlachsen des Lichtvorhangs 1 oder sogar nur einer Strahlachse des Lichtvorhangs 1 als Signalquelle herangezogen. Die als Signalquelle ausgebildeten Strahlachsen können in einem Einlernvorgang eingelernt werden.

In der Überbrückungseinheit 8 wird aus den Objektvorhandensignalen der Signalquellen, obwohl diese selbst nicht fehlersicher sind, ein sicheres Überbrückungssignal dadurch generiert, dass eine Gleichzeitigkeitsüberwachung der Objektvorhandensignale durchgeführt wird. Diese erfolgt derart, dass in der Überbrückungseinheit 8 geprüft wird, ob nach Registrieren eines Objektvorhandensignals mit der externen Signalquelle innerhalb eines vorgegebenen Zeitintervalls von der im Lichtvorhang 1 integrierten Signalquelle ein Objektvorhandensignal generiert wird. Entsprechend der normativen Anforderungen beträgt das Zeitintervall maximal 4s.

Ist diese Bedingung erfüllt, so wird insbesondere für eine bestimmte Zeitdauer, von der Überbrückungseinheit 8 der Sicherheitssensor, das heißt dessen Sicherheitsfunktion überbrückt, so dass eine Objektdetektion des Sicherheitssensors innerhalb des Schutzfelds nicht mehr zu einem Abschaltbefehl für die Anlage führt. Damit kann die Palette den Lichtvorhang 1 passieren.

Wird dagegen in der Überbrückungseinheit 8 zwar das erste Objektvorhandensignal der externen Signalquelle registriert, bleibt jedoch innerhalb des Zeitintervalls das Objektvorhandensignal der Signalquelle im Sicherheitssensor aus, so überführt die Überbrückungseinheit den Sicherheitssensor in einen sicheren Verriegelungszustand und die Anlage wird abgeschaltet.

Bei der Gleichzeitigkeitsüberwachung der Überbrückungseinheit 8 wird zunächst mit der ersten Signalquelle die Palette als zulässiges Objekt vor der Einfahrt in das Schutzfeld identifiziert. Da die Bewegungsrichtung sowie die Geschwindigkeit der Palette bekannt sind und das Zeitintervall hieran angepasst ist, wird mit der Signaldetektion der Palette mit der Signalquelle im Sicherheitssensor und durch die Gleichzeitigkeitsüberwachung der Objektvorhandensignale beider Signalquellen eine fehlersichere Detektion der Palette erhalten.

Mit den Signalquellen kann generell nicht nur das beschriebene Einfahren der Palette P oder allgemein eines zulässigen Objekts in das Schutzfeld kontrolliert werden, sondern auch dessen Ausfahrt. Dabei muss bei der Ausfahrt mit den Signalquellen keine Unterscheidung zwischen dem zulässigen Objekt und sicherheitskritischen Objekten erfolgen. Dabei erfolgt allgemein in der Überbrückungseinheit 8 ein Beenden der Überbrückung, wenn das zulässige Objekt aus dem Schutzfeld ausgefahren ist, so dass dann der Sicherheitssensor wieder seine Sicherheitsfunktion ausübt.

### Bezugszeichenliste

- (1): Lichtvorhang
- (2): Förderband
- (3): Lichtstrahlen
- (4): Sender
- (5): Gehäuse
- (6): Empfänger
- (7): Gehäuse
- (8): Überbrückungseinheit
- (9): Schaltausgang
- (10): Ausgangsschaltung
- (11): Steuerung

## Patentansprüche

1. Verfahren zur Gefahrenbereichsüberwachung einer Maschine oder Anlage mittels eines Sicherheitssensors, umfassend eine Sensoreinheit mit wenigstens einem Lichtstrahlen emittierenden Sender und einem Lichtstrahlen empfangenden Empfänger zur Überwachung eines Schutzfelds sowie eine Auswerteeinheit, in welcher bei Erfassung eines Objekts im Schutzfeld als Sicherheitsfunktion ein Abschaltbefehl für die Maschine oder Anlage generiert wird, wobei eine externe oder interne Überbrückungseinheit (8) vorgesehen ist, mittels derer die Sicherheitsfunktion des Sicherheitssensors überbrückt wird, wenn innerhalb eines Zeitintervalls von zwei unabhängigen Signalquellen jeweils ein Objektvorhandensignal registriert wird, wobei eine der Signalquellen im Sicherheitssensor selbst integriert ist, und **dadurch gekennzeichnet, dass** der Sicherheitssensor durch die Überbrückungseinheit (8) in einen sicheren Verriegelungszustand, der zu einem Abschalten der Maschine oder Anlage führt, überführt ist, wenn in der Überbrückungseinheit (8) nach Registrieren des ersten Objektvorhandensignals innerhalb des Zeitintervalls das zweite Objektvorhandensignal nicht registriert wird.

2. Verfahren nach Anspruch 1, **dadurch gekennzeichnet, dass** die Objektvorhandensignale der Signalquellen nicht sicher sind.

3. Verfahren nach einem der Ansprüche 1 oder 2, **dadurch gekennzeichnet, dass** die Objektvorhandensignale der Signalquellen selbsttätig generiert werden und das Objektvorhandensignal der nicht im Sicherheitssensor integrierten Signalquelle unabhängig von menschlichen Eingriffen generiert wird.

4. Verfahren nach einem der Ansprüche 1 bis 3, **dadurch gekennzeichnet, dass** ein Objektvorhandensignal in einer externen Signalquelle generiert wird, wenn ein Objekt vor Eindringen in das Schutzfeld erfasst oder bekannt wird.

5. Verfahren nach Anspruch 4, **dadurch gekennzeichnet, dass** die externe Signalquelle von einer nicht sicheren Steuerung (11) gebildet ist, in welcher das Signal wenigstens eines Sensors oder Arbeitsgeräts ausgewertet wird.

6. Verfahren nach einem der Ansprüche 1 bis 5, **dadurch gekennzeichnet, dass** die in diesem integrierte Signalquelle von dessen Sensoreinheit oder Teilen hiervon gebildet ist.

7. Verfahren nach einem der Ansprüche 1 bis 5, **dadurch gekennzeichnet, dass** die in diesem integrierte Signalquelle von einem separaten Sensor gebildet ist.

8. Verfahren nach Anspruch 7, **dadurch gekennzeichnet, dass** dessen Auswerteeinheit für die Auswertung der Signale des Sensors mitgenutzt wird, wobei mittels einer Firmware ein zusätzlicher Schaltpfad für den Sensor realisiert ist.

9. Verfahren nach einem der Ansprüche 1 bis 8, **dadurch gekennzeichnet, dass** dessen Auswerteeinheit einen redundanten Aufbau aufweist.

10. Verfahren nach Anspruch 9, **dadurch gekennzeichnet, dass** zwei sich gegenseitig zyklisch überprüfende Microcontroller aufweist.

11. Verfahren nach einem der Ansprüche 1 bis 10, **dadurch gekennzeichnet, dass** die Überbrückungseinheit (8) in der Auswerteeinheit integriert ist oder von einer separaten redundanten Rechnereinheit gebildet ist.

12. Verfahren nach einem der Ansprüche 1 bis 11, **dadurch gekennzeichnet, dass** dieser als Lichtvorhang (1), Flächendistanzsensor oder Kamerasystem ausgebildet ist.

13. Verfahren nach einem der Ansprüche 1 bis 12, **dadurch gekennzeichnet, dass** die Überbrückungseinheit (8) als externe Einheit dadurch ausgebildet ist, dass diese in einer Funktionseinheit eines Sicherheitsmonitors eines sicheren Bussystems vorgesehen ist, oder dass diese in einem separaten mutingfähigen Steuergerät integriert ist.

14. Verfahren nach einem der Ansprüche 1 bis 13, **dadurch gekennzeichnet, dass** die Überbrückung aufgehoben wird, wenn eine der Signalquellen keine Objektdetektion mehr signalisiert oder im Schutzfeld des Sicherheitssensors kein Objekt registriert wird.

## Claims

1. Method for monitoring a danger area of a machine or installation by means of a safety sensor, comprising a sensor unit with at least one transmitter emitting light beams and at least one receiver receiving light beams for monitoring a field of protection as well as an evaluating unit in which in the case of detection of an object in the field of protection a switch-off command for the machine or installation is generated as a safety function, wherein an external or internal bridging-over unit (8) is provided, by means of which the safety function of the safety sensor is bridged over when a respective object-present signal from two independent signal sources is registered within a time interval, and wherein one of the signal sources is integrated in the safety sensor itself, **characterised in that** the safety sensor is transferred by the bridging-over unit (8) into a secure locking state, which leads to switching-off of the machine or installation, when the second object-present signal is not registered in the bridging-over unit (8) within the time interval after registration of the first object-present signal.

2. Method according to claim 1, **characterised in that** the object-present signals of the signal sources are not secure.

3. Method according to one of claims 1 and 2, **characterised in that** the object-present signals of the signal sources are generated automatically and the object-present signal of the signal source not integrated in the safety sensor is generated independently of human intervention.

4. Method according to any one of claims 1 to 3, **characterised in that** an object-present signal is generated in an external signal source when an object is detected or known before penetration into the field of protection.

5. Method according to claim 4, **characterised in that** the external signal source is formed by a non-secure control (11) in which the signal of at least one sensor or working apparatus is evaluated.

6. Method according to any one of claims 1 to 5, **characterised in that** the signal source integrated therein is formed by the sensor unit thereof or parts of that.

7. Method according to any one of claims 1 to 5, **characterised in that** the signal source integrated therein is formed by a separate sensor.

8. Method according to claim 7, **characterised in that** the evaluating unit thereof is conjunctively used for evaluation of the signals of the sensor, wherein an additional switching path for the sensor is realised by means of firmware.

9. Method according to any one of claims 1 to 8, **characterised in that** the evaluating unit thereof has a redundant form of construction.

10. Method according to claim 9, **characterised in that** it comprises two reciprocally cyclically checking microcontrollers.

11. Method according to any one of claims 1 to 10, **characterised in that** the bridging-over unit (8) is integrated in the evaluating unit or is formed by a separate redundant computer unit.

12. Method according to any one of claims 1 to 11, **characterised in that** this is constructed as a light curtain (1), area-distance sensor or camera system.

13. Method according to any one of claims 1 to 12, **characterised in that** the bridging-over unit (8) is constructed as an external unit **in that** this is provided in a functional unit of a safety monitor of a secure bus system or that this is integrated in a separate mutingcapable control apparatus.

14. Method according to any one of claims 1 to 13, **characterised in that** the bridging-over is cancelled when one of the signal sources no longer signals object detection or no object is registered in the field of protection of the safety sensor.

## Revendications

1. Procédé pour la surveillance d'une zone de danger d'une machine ou d'une installation au moyen d'un capteur de sécurité, comprenant une unité de détection avec au moins un émetteur émettant des rayons lumineux et un récepteur recevant des rayons lumineux pour la surveillance d'un champ de protection ainsi qu'une unité d'évaluation dans laquelle, en cas de détection d'un objet dans le champ de protection, un ordre d'arrêt de la machine ou de l'installation est généré en tant que fonction de sécurité, une unité de pontage (8) externe ou interne étant prévue, au moyen de laquelle la fonction de sécurité du capteur de sécurité est pontée lorsqu'un signal de présence d'objet de chacune de deux sources de signaux indépendantes est enregistré dans un intervalle de temps, une des sources de signaux étant intégrée dans le capteur de sécurité lui-même, et **caractérisé en ce que** le capteur de sécurité est mis par l'unité de pontage (8) dans un état de verrouillage sécurisé, qui entraîne un arrêt de la machine ou de l'installation, lorsque, après enregistrement du premier signal de présence d'objet, le deuxième signal de présence d'objet n'est pas enregistré dans l'unité de pontage (8) dans ledit intervalle de temps.

2. Procédé selon la revendication 1, **caractérisé en ce que** les signaux de présence d'objet des sources de signaux ne sont pas sécurisés.

3. Procédé selon l'une des revendications 1 ou 2, **caractérisé en ce que** les signaux de présence d'objet des sources de signaux sont générés automatiquement et le signal de présence d'objet de la source de signaux qui n'est pas intégrée dans le capteur de sécurité est généré indépendamment de toute intervention humaine.

4. Procédé selon l'une des revendications 1 à 3, **caractérisé en ce qu'**un signal de présence d'objet est généré dans une source de signaux externe lorsqu'un objet est détecté ou reconnu avant de pénétrer dans le champ de protection.

5. Procédé selon la revendication 4, **caractérisé en ce que** la source de signaux externe est formée par une commande non sécurisée (11) dans laquelle le signal d'au moins un capteur ou instrument de travail est évalué.

6. Procédé selon l'une des revendications 1 à 5, **caractérisé en ce que** la source de signaux intégrée dans le capteur de sécurité est formée par son unité de détection ou des parties de celle-ci.

7. Procédé selon l'une des revendications 1 à 5, **caractérisé en ce que** la source de signaux intégrée dans le capteur de sécurité est formée par un capteur séparé.

8. Procédé selon la revendication 7, **caractérisé en ce que** l'unité d'évaluation du capteur de sécurité est utilisée également pour l'évaluation des signaux du capteur, un chemin de circuit supplémentaire pour le capteur étant réalisé au moyen d'un firmware.

9. Procédé selon l'une des revendications 1 à 8, **caractérisé en ce que** l'unité d'évaluation du capteur de sécurité présente une structure redondante.

10. Procédé selon la revendication 9, **caractérisé en ce que** le capteur de sécurité présente deux microcontrôleurs se vérifiant mutuellement cycliquement.

11. Procédé selon l'une des revendications 1 à 10, **caractérisé en ce que** l'unité de pontage (8) est intégrée dans l'unité d'évaluation ou formée par une unité de calcul redondante séparée.

12. Procédé selon l'une des revendications 1 à 11, **caractérisé en ce que** le capteur de sécurité est réalisé sous la forme d'une barrière immatérielle (1), d'un capteur de distance de surface ou d'un système de caméra.

13. Procédé selon l'une des revendications 1 à 12, **caractérisé en ce que** l'unité de pontage (8) est réalisée sous la forme d'une unité externe par le fait que celle-ci est prévue dans une unité fonctionnelle d'un moniteur de sécurité d'un système de bus sécurisé ou que celle-ci est intégrée dans un appareil de commande séparé avec fonction de muting.

14. Procédé selon l'une des revendications 1 à 13, **caractérisé en ce que** le pontage est annulé lorsqu'une des sources de signaux ne signale plus de détection d'objet ou qu'aucun objet n'est enregistré dans le champ de protection du capteur de sécurité.
